# EUROPEAN PATENT APPLICATION

(11) **EP 4 283 707 A1**
(43) Date of publication of application: **29.11.2023**
(21) Application number: 22882615.2
(22) Date of filing: 29.09.2022
(51) Int. Cl.: H01M 4/133, H01M 4/134, H01M 4/62, H01M 10/0525

(54) **NEGATIVE ELECTRODE PLATE, PREPARATION METHOD THEREFOR, SECONDARY BATTERY CONTAINING SAME, BATTERY MODULE, BATTERY PACK, AND ELECTRICAL DEVICE**

(30) Priority: 21.10.2021 CN 202111229457
(71) Applicant: Contemporary Amperex Technology Co., Limited, Ningde City, Fujian 352100 (CN)
(72) Inventor: ZHANG, Tongxian, Ningde City, Fujian 352100 (CN); ZHANG, Ming, Ningde City, Fujian 352100 (CN)
(74) Representative: Gerauer, Marc Philippé
(86) International application number: PCT/CN2022/122555
(87) International publication number: WO 2023/066004

(57) **Abstract**

This application provides a negative electrode plate including a current collector and a negative electrode film layer disposed on at least one surface of the current collector, where the negative electrode film layer includes a negative electrode active material and an emulsion-type binder, and at least a portion of the emulsion-type binder is in irregular film-like distribution on surface of the negative electrode active material. The negative electrode plate has significantly improved cohesion and adhesion, and the problems of reducing the passing rate of the electrode plate, such as active material powder dropping, negative electrode film layer cracking, and negative electrode film layer falling off, are significantly alleviated. The cycling performance of the secondary battery containing the negative electrode plate of the present invention is significantly improved. This application also provides a preparation method of negative electrode plate, and a secondary battery, a battery module, a battery pack, and an electric apparatus containing such negative electrode plate.

## Description

### TECHNICAL FIELD

This application relates to the field of lithium battery technologies, and in particular, to a negative electrode plate, a preparation method thereof, and a secondary battery, a battery module, a battery pack, and an electric apparatus containing the same.

### BACKGROUND

In recent years, secondary batteries have been widely used in many fields. However, in a preparation process of negative electrode plate of a secondary battery, especially in a process of drying the negative electrode plate, a negative electrode binder is very likely to float up significantly with evaporation of water, causing uneven distribution of the binder in a negative electrode film layer, which then leads to poor adhesion between negative electrode active substances and results in the negative electrode plate being prone to powder falling off, cracking, and other undesirable phenomena, negatively affecting battery performance.

### SUMMARY

This application has been made in view of the foregoing issues. An objective of this application is to provide a negative electrode plate with uniform distribution of binder, which is not prone to powder falling off and cracking, and its preparation method, and to provide a secondary battery prepared by using the negative electrode plate.

To achieve the foregoing objective, this application provides a negative electrode plate and a preparation method thereof.

A first aspect of this application provides a negative electrode plate, including:
a current collector and a negative electrode film layer disposed on at least one surface of the current collector, where the negative electrode film layer includes a negative electrode active material and an emulsion-type binder, and at least a portion of the emulsion-type binder is in irregular film-like distribution on surface of the negative electrode active material; and
the irregular film-like distribution refers to a state in which, in an image of the negative electrode film layer taken by a scanning electron microscope (SEM) at a magnification of 10K, the emulsion-type binder is in irregularly shaped thin film-like distribution on the surface of the negative electrode active material, neither in single particle distribution nor in distribution of clusters composed of single particles.

In any embodiment, on the surface of the negative electrode active material, in the SEM image of the negative electrode film layer taken by the scanning electron microscope at a magnification of 10K, a piece of the emulsion-type binder in irregular film-like distribution is arbitrarily selected, a closed region is constructed along edge of a film-like structure of the piece of the emulsion-type binder, and a radius of a standard circle normalized from the closed region is not less than 500 nm.

Thus, in this application, with at least a portion of the emulsion-type binder in irregular film-like distribution on the negative electrode active material, the adhesion and cohesion of the negative electrode plate are improved, thereby improving the battery performance.

In any embodiment, in the SEM image of the negative electrode film layer at a magnification of 10K, given that an area sum of regions in which the emulsion-type binder is in irregular film-like distribution is A and that an area sum of regions in which the emulsion-type binder is in single particle distribution or in distribution of clusters composed of single particles is B, then a ratio of A to (A + B) is at least 10:100, optionally 60:100-100:100, and further optionally 80:100-98:100.

Increasing an average area ratio of the emulsion-type binder in irregular film-like distribution can improve the cohesion and adhesion of the negative electrode plate, thereby improving structural stability of the electrode plate.

In any embodiment, in the negative electrode plate, in a direction of the outer surface of the negative electrode film layer toward the current collector, given that a ratio of a longitudinal depth of the negative electrode film layer to a total thickness of entire negative electrode film layer is d, that a ratio of a mass percentage of the emulsion-type binder in the negative electrode film layer of the longitudinal depth to a mass percentage of the emulsion-type binder in the entire negative electrode film layer is x, that the total thickness of the entire negative electrode film layer is 1, and that the mass percentage of the emulsion-type binder in the entire negative electrode film layer is 1, then 0 < d < 1 and 0 < x < 1; and x and d satisfy: 1 < x/d ≤ 1.8, optionally 1 < x/d ≤ 1.5.

The mechanical stability of the negative electrode plate is improved by improving the uniformity and consistency of the distribution of the emulsion-type binder in the thickness direction of the negative electrode film layer.

In any embodiment, on the surface of a same side of the current collector, the negative electrode film layer includes two sub-film layer regions having a same film layer thickness; in a direction of the outer surface of the negative electrode film layer toward the current collector, mass percentage of the emulsion-type binder in a lower half layer of the negative electrode film layer is less than mass percentage of the emulsion-type binder in an upper half layer of the negative electrode film layer by a difference of not more than 12%, the lower half layer and the upper half layer being bounded by 1/2 of thickness of the negative electrode film layer located on the same side of the current collector. The mechanical stability of the negative electrode plate is improved by improving the uniformity and consistency of the distribution of the emulsion-type binder in the thickness direction of the negative electrode film layer.

In any embodiment, the emulsion-type binder is selected from at least one of styrene-butadiene rubber (SBR), polyacrylate, ethylene propylene rubber, nitrile rubber, and polyvinylidene fluoride (PVDF). With selection of a suitable emulsion-type binder, better bonding performance can be achieved.

A second aspect of this application also provides a preparation method of negative electrode plate, including the following steps:
pretreating an emulsion-type binder, where the pretreatment method includes at least one of the following operations: ultrasonication, settling, centrifugation, or kneading; mixing a negative electrode active substance, a conductive agent, and an additive in a predetermined ratio to obtain a first mixture; mixing the pretreated emulsion-type binder, the first mixture, and deionized water to obtain a negative electrode slurry; and applying the negative electrode slurry to at least one surface of a current collector, followed by drying to obtain the negative electrode plate; and alternatively
the method includes the following steps:
   mixing a negative electrode active substance, a conductive agent, and an additive in a predetermined ratio to obtain a first mixture; uniformly mixing the emulsion-type binder, the first mixture, and deionized water by kneading and stirring to obtain a negative electrode slurry; and applying the negative electrode slurry to at least one surface of a current collector, followed by drying to obtain the negative electrode plate;
   where
   the negative electrode plate includes a current collector and a negative electrode film layer disposed on at least one surface of the current collector, where the negative electrode film layer includes a negative electrode active material and an emulsion-type binder, and most or all of the emulsion-type binder is in irregular film-like distribution on the surface of the negative electrode active material; and
   the irregular film-like distribution refers to a state in which, in an SEM image of the negative electrode film layer taken by a scanning electron microscope at a magnification of 10K, the emulsion-type binder is in irregularly shaped thin film-like distribution on the surface of the negative electrode active material, not in single particle distribution or in distribution of clusters composed of single particles.

Thus, in this application, the emulsion-type binder is partially or overwhelmingly characterized by an irregular film-like distribution state on the surface of the negative electrode active material through process adjustment to change a conventional method of adding the emulsion-type binder, thereby improving the cohesion and adhesion of the negative electrode plate and improving the battery performance.

A third aspect of this application provides a secondary battery including the negative electrode plate according to the first aspect of this application.

A fourth aspect of this application provides a battery module including the secondary battery according to the third aspect of this application.

A fifth aspect of this application provides a battery pack including the battery module according to the fourth aspect of this application.

A sixth aspect of this application provides an electric apparatus, including at least one of the secondary battery according to the third aspect of this application, the battery module according to the fourth aspect of this application, or the battery pack according to the fifth aspect of this application.

### Effects of Invention

As compared with the prior art, in the present invention, with the negative electrode plate including at least a portion of the emulsion-type binder in irregular film-like distribution obtained by adjustment of the preparation process, at least the following beneficial technical effects are achieved: suppressing migration and floating of the emulsion-type binder toward the surface of the negative electrode film layer during drying of the negative electrode plate, improving the adhesion and cohesion of the negative electrode plate, and improving the cycling performance of the battery.

### BRIEF DESCRIPTION OF DRAWINGS

FIG. 1 is an SEM image of a negative electrode film layer on a negative electrode plate of example 1, in which an emulsion-type binder with different states of distribution is representatively shown: the emulsion-type binder in irregular film-like distribution is in region 1, the emulsion-type binder in single particle distribution is in region 2, and the emulsion-type binder in distribution of clusters composed of single particles is in region 3.
FIG. 2 is an SEM image of a negative electrode film layer on a negative electrode plate of comparative example 1.
FIG. 3 is an SEM image of a negative electrode film layer on a negative electrode plate of example 5, showing an emulsion-type binder in irregular film-like distribution.
FIG. 4 shows test results of cycling retention rate of secondary batteries assembled using example 5 and comparative example 1.
FIG. 5 shows test results of direct current resistance (DCR) of secondary batteries assembled using example 5 and comparative example 1.
FIG. 6 is a schematic diagram of a secondary battery according to an embodiment of this application.
FIG. 7 is an exploded view of the secondary battery according to the embodiment of this application in FIG. 6.
FIG. 8 is a schematic diagram of a battery module according to an embodiment of this application.
FIG. 9 is a schematic diagram of a battery pack according to an embodiment of this application.
FIG. 10 is an exploded view of the battery pack of an embodiment of this application shown in FIG. 9.
FIG. 11 is a schematic diagram of an electric apparatus using a secondary battery as a power source according to an embodiment of this application.

Reference signs in the accompanying drawings are described as follows:
1. battery pack; 2. upper box body; 3. lower box body; 4. battery module; 5. secondary battery; 51. housing; 52. electrode assembly; and 53. top cover assembly.

### DESCRIPTION OF EMBODIMENTS

The following specifically discloses embodiments of a negative electrode plate and a manufacturing method thereof, a secondary battery, a battery module, a battery pack, and an electrical apparatus in this application with appropriate reference to detailed descriptions of accompanying drawings. However, there may be cases where unnecessary detailed descriptions are omitted. For example, detailed descriptions of a well-known matter and repeated descriptions of actually identical structures have been omitted. This is to avoid unnecessarily prolonging the following description, for ease of understanding by persons skilled in the art. In addition, the accompanying drawings and the following descriptions are provided for persons skilled in the art to fully understand this application and are not intended to limit the subject matter recorded in the claims.

"Ranges" disclosed in this application are defined in the form of lower and upper limits. A given range is defined by one lower limit and one upper limit selected, where the selected lower and upper limits define boundaries of that particular range. Ranges defined in this method may or may not include end values, and any combinations may be used, meaning any lower limit may be combined with any upper limit to form a range. For example, if ranges of 60-120 and 80-110 are provided for a specific parameter, it is understood that ranges of 60-110 and 80-120 can also be envisioned. In addition, if minimum values of a range are given as 1 and 2, and maximum values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0-5" means that all real numbers in the range of "0-5" are listed herein, and "0-5" is just a short representation of a combination of these values. In addition, a parameter expressed as an integer greater than or equal to 2 is equivalent to disclosure that the parameter is, for example, an integer among 2, 3, 4, 5, 6, 7, 8, 9, 10, 11, 12, and so on.

Unless otherwise specified, all the embodiments and optional embodiments of this application can be combined with each other to form new technical solutions.

Unless otherwise specified, all the technical features and optional technical features of this application can be combined with each other to form new technical solutions.

Unless otherwise specified, all the steps in this application can be performed in the order described or in random order, preferably, in the order described. For example, a method including steps (a) and (b) indicates that the method may include steps (a) and (b) performed in order or may include steps (b) and (a) performed in order. For example, the foregoing method may further include step (c), which indicates that step (c) may be added to the method in any ordinal position, for example, the method may include steps (a), (b), and (c), steps (a), (c), and (b), steps (c), (a), and (b), or the like.

Unless otherwise specified, "include" and "contain" mentioned in this application are inclusive or may be exclusive. For example, the terms "include" and "contain" can mean that other unlisted components may also be included or contained, or only listed components are included or contained.

Unless otherwise specified, in this application, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

Currently, an emulsion-type binder is commonly used as the negative electrode binder for secondary battery negative electrodes. However, the emulsion-type binder exists in the form of dispersed colloidal particles in a slurry, and the negative electrode plates prepared using this slurry often have poor adhesion, resulting in insufficient adhesion between negative electrode active substances or between an active substance layer and a current collector and causing powder falling of the active substance, cracking of the negative electrode film layer, falling off of negative electrode film layer, and the like, which in turn deteriorates the battery performance.

In view of the foregoing problems, the inventors have developed a negative electrode plate in which a binder is in irregular film-like distribution on surface of a negative electrode active material. The cohesion between particles of the negative electrode active material of the negative electrode plate has been significantly improved, the adhesion between the negative electrode film layer and the current collector of the negative electrode plate has been significantly improved, and the problems of reducing the passing rate of the electrode plate, such as powder falling of active material, cracking of the negative electrode film layer, and falling off of the negative electrode film layer, are significantly alleviated. The cycling performance of the secondary battery prepared using the negative electrode plate of the present invention is significantly improved.

### [Negative electrode plate]

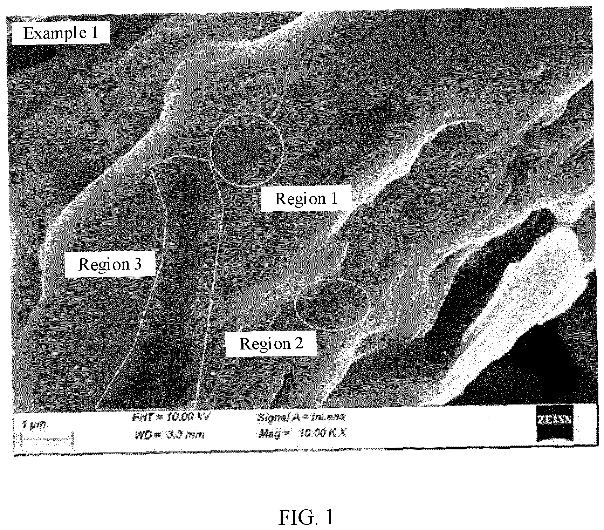

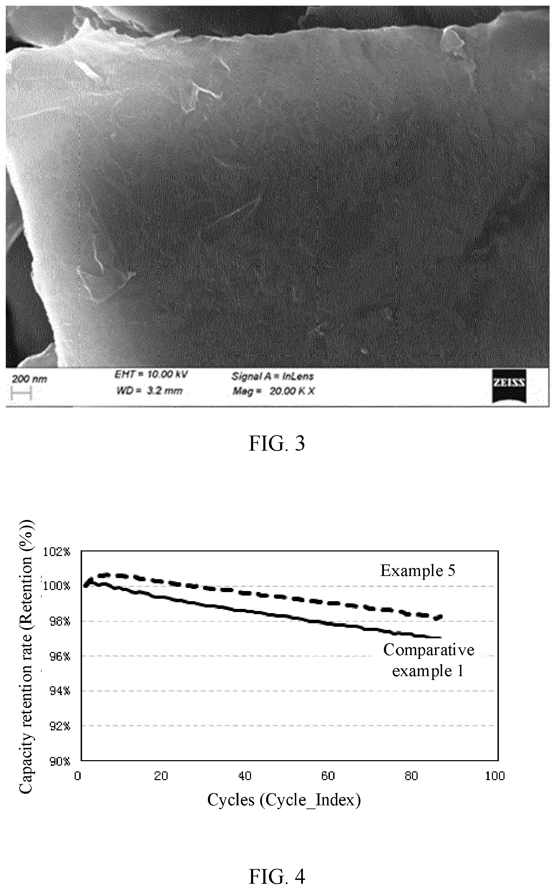

This application proposes a negative electrode plate, including a current collector and a negative electrode film layer disposed on at least one surface of the current collector, where the negative electrode film layer includes a negative electrode active material and an emulsion-type binder; where
at least a portion of the emulsion-type binder is in irregular film-like distribution on surface of the negative electrode active material; and
the "irregular film-like distribution" refers to a state in which, in an SEM image of the negative electrode film layer taken by a scanning electron microscope at a magnification of 10K, the emulsion-type binder is in irregularly shaped thin film-like distribution on the surface of the negative electrode active material, neither in single particle distribution nor in distribution of clusters composed of single particles. For example, with reference to an SEM image of FIG. 1, the irregular film-like substance in region 1 of the figure is the emulsion-type binder in "irregular film-like distribution". FIG. 3 shows an emulsion-type binder in irregular film-like distribution.

The "emulsion-type binder" is a kind of water-emulsion binder of non-water-soluble polymers, may be a resin-containing emulsion or a rubber-based latex binder, and is an important water-based binder. It should be noted that the term "emulsion-type binder" refers to a binder product that is located in the negative electrode film layer and has been dehydrated with the drying process of the electrode plate and means a type of the binder and not a form of the binder on surface of the negative electrode active material. The emulsion-type binder in this application is selected from at least one of styrene-butadiene rubber, polyacrylate, ethylene propylene rubber, nitrile rubber, and polyvinylidene fluoride.

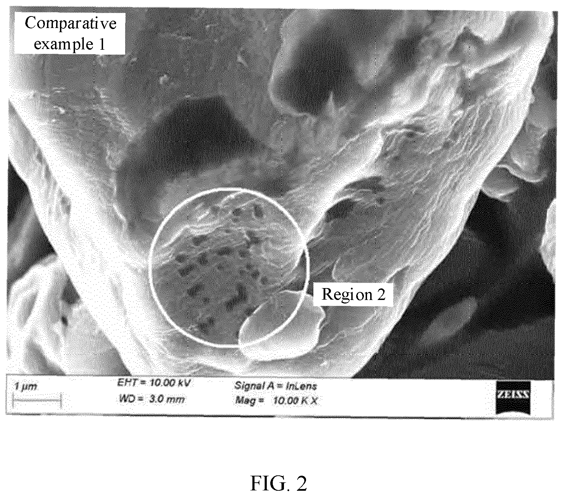

At least a portion of the emulsion-type binder is in irregular film-like distribution on surface of the negative electrode active material. "At least a portion of" means that on the surface of the negative electrode active material, the emulsion-type binder in single particle distribution or in distribution of clusters composed of single particles is present in addition to the emulsion-type binder in irregular film-like distribution. For example, with reference to the SEM image of FIG. 1, an emulsion-type binder in irregular film-like distribution is in the region 1 of the figure; an emulsion-type binder in single particle distribution is in the region 2; and darker colored substances in the region 3 clearly show that these darker colored substances are emulsion-type binders in distribution of clusters composed of single particles. The SEM image of FIG. 2 more clearly shows the emulsion-type binder in single particle distribution. The SEM image of FIG. 3 is a schematic diagram of an emulsion-type binder in irregular film-like distribution.

The "surface of the negative electrode active material" refers to the surface of the negative electrode active material particles (for example, graphite) in the SEM image at a magnification of 10K.

On the surface of the negative electrode active material of the negative electrode plate of this application, compared to the binder of the prior art that is in single particle distribution or in distribution of clusters composed of single particles, the emulsion-type binder of this application adheres to the surface of the negative electrode active material in the form of "irregular film-like distribution". Thus, a binding area between particles of the negative electrode active material is significantly increased, the cohesion is significantly increased, and then problems such as powder falling of the active material and cracking of the negative electrode film layer are significantly alleviated. In addition, a binding area between the negative electrode active material and the current collector is increased, the adhesion therebetween is significantly increased, and then the falling off of the negative electrode film layer is significantly alleviated. The cycling performance of the secondary battery prepared using the negative electrode plate of this application is significantly improved.

In a preferred embodiment, in the negative electrode plate of this application, the emulsion-type binder is completely in irregular film-like distribution on surface of the negative electrode active material.

Unlike this application, with reference to the SEM image of comparative example 1 of FIG. 2, the binder is still obviously in particle distribution in the negative electrode plate of the prior art after cold pressing, which makes the adhesion between the particles of the negative electrode active material and the adhesion between the negative electrode active material and the current collector significantly less than that in the negative electrode plate of this application.

In some embodiments, on the surface of the negative electrode active material in this application, in the SEM image of the negative electrode film layer taken by the scanning electron microscope at a magnification of 10K, a piece of the emulsion-type binder in irregular film-like distribution is arbitrarily selected, a closed region is constructed along edge of a film-like structure of the piece of the emulsion-type binder, and a radius of a standard circle normalized from the closed region is not less than 500 nm. The irregular film-like distribution can significantly enhance the cohesion and adhesion of the negative electrode plate.

The "radius of a standard circle normalized" means that: An area of the closed region obtained by using an SEM area measuring tool is S, and with the area of the standard circle equivalent to S = πR², a calculated R is the "radius of a standard circle normalized" in this application.

In some embodiments, optionally, on the surface of the negative electrode active material, when the emulsion-type binder is in single particle distribution or in distribution of clusters composed of single particles, a growth rate of a maximum particle size of single particles relative to a particle size of the emulsion-type binder in emulsion state is less than or equal to 150%.

The "particle size of the emulsion-type binder in emulsion state" refers to a particle size of a single colloidal particle in an emulsion that is commercially available, used as a raw material in a preparation method, and in emulsion state, which is typically 50-300 nm.

The "maximum particle size" refers to the longest diameter of the irregularly shaped spherical single particle emulsion-type binder in the SEM image of the negative electrode film layer taken by the scanning electron microscope at a magnification of 10K.

In an embodiment, on the surface of the negative electrode active material, when the emulsion-type binder is partially in a single particle distribution, a growth rate of a maximum particle size of the emulsion-type binder in single particle distribution relative to a particle size of the emulsion-type binder in emulsion state is less than or equal to 150%.

It should be noted that the binder in single particle distribution contained in the negative electrode film layer of this application basically maintains the basic form and size of the emulsion-type binder in emulsion state and has no significant improvement on the technical effect of this application, that is, significant enhancement of the cohesion and adhesion of the negative electrode plate. In fact, the technical effect of this application is mainly obtained by the emulsion-type binder in irregular film-like distribution generated by optimizing the preparation method of the negative electrode plate. To be specific, the irregular film-like distribution of the binder has the effect of significantly improving the cohesion and adhesion of the negative electrode plate.

In some embodiments, optionally, in the SEM image of the negative electrode film layer at a magnification of 10K, given that an area sum of regions in which the emulsion-type binder is in irregular film-like distribution is A and that an area sum of regions in which the emulsion-type binder is in single particle distribution or in distribution of clusters composed of single particles is B, then a ratio of A to (A + B) is at least 10:100, optionally 60:100-100:100, and further optionally 80:100-98:100.

The inventors has found that increasing the area ratio of the emulsion-type binder in irregular film-like distribution can improve the bonding effect between the particles of the negative electrode active material and the binder strength between the negative electrode active material and the current collector, and then improves the cohesion and adhesion of the negative electrode plate, making the electrode plate have high structural stability and further improving the cycling performance of the electrode plate.

The (A + B) can be tested by the following method: At a same magnification (10K or 20K), on a same negative electrode plate, 20 different positions are randomly selected and photographed, and an area sum of regions of the emulsion-type binder in irregular film-like distribution and an area sum of regions in which the emulsion-type binder is in single particle distribution or in distribution of clusters composed of single particles in each image are calculated; then, based on these 20 images, an average of their respective area sums is calculated, which average is the area sum of a corresponding distribution area.

The "cohesion" in this application refers to the bonding performance between particles of the active substances of the negative electrode film layer.

The "adhesion" in this application refers to the bonding performance between the negative electrode film layer and the current collector and between the negative electrode active material and the current collector.

In some embodiments, in a direction of the outer surface of the negative electrode film layer toward the current collector, given that a ratio of a longitudinal depth of the negative electrode film layer to a total thickness of entire negative electrode film layer is d, that a ratio of a mass percentage of the emulsion-type binder in the negative electrode film layer of the longitudinal depth to a mass percentage of the emulsion-type binder in the entire negative electrode film layer is x, that the total thickness of the entire negative electrode film layer is 1, and that the mass percentage of the emulsion-type binder in the entire negative electrode film layer is 1, then 0 < d < 1 and 0 < x < 1; and x and d satisfy: 1 < x/d ≤ 1.8, optionally 1 < x/d ≤ 1.5.

A magnitude of the difference of (x/d) -1 indicates, with respect to an ideal state (that is, x/d = 1) of uniform distribution of the emulsion-type binder in the entire negative electrode film layer, a degree of deviation of the mass percentage of the emulsion-type binder in the negative electrode film layer of a longitudinal depth from the uniform distribution, which characterizes a floating degree of the emulsion-type binder in thickness direction of the negative electrode film layer.

For the negative electrode plate of this application, x/d ≤ 1.8 indicates that a phenomenon of uneven distribution of the binder (floating problem) is improved and that the structural stability of the negative electrode plate and the performance of the secondary battery using this negative electrode plate are optimized.

A test process for any d of this application is as follows: A negative electrode film layer on the current collector side is selected, thickness of the negative electrode film layer is measured as D, and a negative electrode film layer corresponding to a predetermined depth D1 is peeled off from the surface of the negative electrode film layer to the predetermined depth D1 along the direction of thickness of the negative electrode film layer using SAICAS (surface and interface cutting analysis system) (that is, thickness of the peeled negative electrode film layer is D1), then d = D1/D.

A test process for any x of this application is as follows: Pyrolysis-mass spectrometry (Py-MS) is used in testing, mass of the emulsion-type binder in the entire negative electrode film layer is X, and mass of the emulsion-type binder in remaining negative electrode film layer after the negative electrode film layer of thickness D1 is peeled off is Y1, then x = (X-Y1)/X.

In some embodiments, optionally, in the negative electrode plate of this application, mass percentage of the emulsion-type binder in a lower half layer of the negative electrode film layer is less than mass percentage of the emulsion-type binder in an upper half layer of the negative electrode film layer by a difference of not more than 12%, the lower half layer and the upper half layer being bounded by 1/2 of thickness of the negative electrode film layer located on a same side of the current collector.

In some embodiments, on a same surface of the current collector, the negative electrode film layer includes four sub-film layer regions having a same film thickness that are a first sub-film layer, a second sub-film layer, a third sub-film layer, and a fourth sub-film layer sequentially in a direction of the outer surface of the negative electrode film layer toward the current collector, and percentage of the emulsion-type binder contained therein decreases sequentially. A difference in percentage of the emulsion-type binder contained in the first sub-film layer and the third sub-film layer is not more than 15%, optionally not more than 10%, and a difference in percentage of the emulsion-type binder contained in the second sub-film layer and the fourth sub-film layer is not more than 18%, optionally not more than 15%.

The inventors have found that the difference in percentage of the emulsion-type binder in further refined individual sub layers of the negative electrode film layer was at most 18%, which indicates that the uniformity and consistency of the binder distribution in the thickness direction of the negative electrode film layers of the present invention has been improved, helping to improve the cycling retention rate of the electrochemical device.

The difference in the mass percentage of the emulsion-type binder between two sub layers of the negative electrode film layer is calculated according to the following formula: (S 1-S2)/S2* 100%,
where on a same side of the negative electrode plate, in the direction of the outer surface of the negative electrode film layer toward the current collector, S 1 is the mass percentage of the emulsion-type binder in the sub layer further away from the current collector, and S2 is the mass percentage of the emulsion-type binder in the sublayer closer to the current collector.

In some embodiments, the negative electrode current collector may be a metal foil current collector or a composite current collector. For example, for the metal foil, a copper foil may be used. The composite current collector may include a polymer material matrix and a metal layer formed on at least one surface of the polymer material matrix. The composite current collector may be formed by forming a metal material (copper, copper alloy, nickel, nickel alloy, titanium, titanium alloy, silver, silver alloy, or the like) on a polymer material matrix (for example, matrices of polypropylene (PP), polyethylene terephthalate (PET), polybutylene terephthalate (PBT), polystyrene (PS), and polyethylene (PE)).

In some embodiments, the negative electrode active material may be a well-known negative electrode active material used for a battery in the art. In an example, the negative electrode active material may include at least one of the following materials: artificial graphite, natural graphite, soft carbon, hard carbon, a silicon-based material, a tin-based material, and lithium titanate. The silicon-based material may be selected from at least one of elemental silicon, silicon-oxygen compound, siliconcarbon composite, silicon-nitrogen composite, and silicon alloy. The tin-based material may be selected from at least one of elemental tin, tin-oxygen compound, and tin alloy. However, this application is not limited to these materials, but may use other conventional materials that can be used as negative electrode active materials for batteries instead. One of these negative electrode active materials may be used alone, or two or more of them may be used in combination.

In some embodiments, the negative electrode film layer further optionally includes a conductive agent. The conductive agent may be selected from at least one of superconducting carbon, acetylene black, carbon black, Ketjen black, carbon dots, carbon nanotubes, graphene, and carbon nanofiber.

On the surface of the negative electrode active material of the negative electrode plate of this application, compared to the binder of the prior art that is "in single particle distribution or in distribution of clusters composed of single particles", the emulsion-type binder of this application adheres to the surface of the negative electrode active material in the form of "irregular film-like distribution". Thus, a binding area between particles of the negative electrode active material is significantly increased, the cohesion is significantly increased, and then problems such as powder falling of the active material and cracking of the negative electrode film layer are significantly alleviated. In addition, a binding area between the negative electrode active material and the current collector is increased, the adhesion therebetween is significantly increased, and then the falling off of the negative electrode film layer is significantly alleviated. The cycling performance of the secondary battery prepared using the negative electrode plate of this application is significantly improved.

### [Preparation method of negative electrode plate]

A preparation method of negative electrode plate, including the following steps:
pretreating an emulsion-type binder, where the pretreatment method includes at least one of the following operations: ultrasonication, settling, centrifugation, and kneading;
mixing a negative electrode active substance, a conductive agent, and an additive in a predetermined ratio to obtain a first mixture;
mixing the pretreated emulsion-type binder, the first mixture, and deionized water to obtain a negative electrode slurry; and
applying the negative electrode slurry to at least one surface of a current collector, followed by drying to obtain the negative electrode plate; where
the negative electrode plate includes a current collector and a negative electrode film layer disposed on at least one surface of the current collector, where the negative electrode film layer includes a negative electrode active material and an emulsion-type binder, and most or all of the emulsion-type binder is in irregular film-like distribution on the surface of the negative electrode active material; and
the irregular film-like distribution refers to a state in which, in an SEM image of the negative electrode film layer taken by a scanning electron microscope at a magnification of 10K, the emulsion-type binder is in irregularly shaped thin film-like distribution on the surface of the negative electrode active material, neither in single particle distribution nor in distribution of clusters composed of single particles.

The inventors have found that with the ultrasonication, settling, centrifugation, or kneading operation, outer shells of colloidal particles of the emulsion-type binder is damaged, and the morphology of the emulsion-type binder and its distribution state on the surface of the negative electrode active material change, so that the emulsion-type binder is partially or overwhelmingly characterized by a film-like distribution, inhibiting floating of the binder, increasing the cohesion and adhesion of the negative electrode plate, and improving the performance of the secondary battery, such as improved cycling performance and lower battery internal resistance.

In some embodiments, the preparation method of negative electrode plate of the present invention includes the following steps:
(a) mixing a negative electrode active substance, a conductive agent, and an additive in a predetermined ratio to obtain a first mixture;
(b) mixing the emulsion-type binder, the first mixture, and deionized water uniformly by kneading and stirring to obtain a negative electrode slurry; and
(c) applying the negative electrode slurry to at least one surface of a current collector, followed by drying to obtain the negative electrode plate.

In some embodiments, step (b) specifically includes:
(b-1) adding the first mixture obtained in step (a) to the emulsion-type binder; then adding deionized water to adjust a mass fraction of solid components in the range of 63-68% by weight to obtain an initial slurry;
(b-2) kneading and stirring the initial slurry obtained in step (b-1); and
(b-3) adding deionized water to adjust a mass fraction of the solid components to 50-60% by weight to obtain a negative electrode slurry.

The steps (b-1), (b-2), and (b-3) are performed in sequence.

In some embodiments, in step (a), a mass fraction of the negative electrode active substance in total solids of the negative electrode slurry is 90-98% by weight, a mass fraction of the conductive agent in the total solids of the negative electrode slurry is 0.5-2% by weight, and a mass fraction of the additive in the total solids of the negative electrode slurry is 0.5-2% by weight. Optionally, a mass ratio of the negative electrode active substance, conductive agent, and additive is optionally 96:1:1.5.

In some embodiments, in step (b), a kneading time is 2-100 min, optionally 20-80 min, and a revolution speed is 20-200 rpm, optionally 50-150 rpm. With appropriate mechanical strength and kneading time, the emulsion-type binder is fully bonded to the negative electrode active material while energy is saved.

In some embodiments, other conventional treatments such as dilution can be combined in the pretreatment operations of the emulsion-type binder in addition to the treatments such as ultrasonication, settling, centrifugation, and kneading. Optionally, the pretreatment of the emulsion-type binder is performed by using a combination of dilution and ultrasonication or dilution and settling.

In some embodiments, the ultrasonication operation may be performed at a temperature of 30-70°C, optionally 40-60°C, a power range of 30-60 kHz, optionally 35-50 kHz, and an ultrasonication time of 10-50 min, optionally 20-40 min. With proper ultrasonication, outer shells of colloidal particles of the emulsion-type binder can be sufficiently damaged, and energy can be saved.

In some embodiments, a settling agent used in the settling operation is selected from alcohols such as methanol, butanol, and isopropanol; or carbonate esters such as methyl ethyl carbonate (EMC), dimethyl carbonate, vinyl carbonate, diethyl carbonate, and propylene carbonate; and a ratio of a mass of the settling agent to a mass of the solid components of the emulsion-type binder is 2:98-10:90, optionally 4:96-6:94. With the use of a proper settling agent and control of the ratio of the mass of the settling agent to the solid components of the emulsion-type binder, the outer shells of the colloidal particles of the emulsion-type binder can be sufficiently damaged, and costs can be saved.

In some embodiments, the diluent used in the dilution operation is deionized water, and a percentage of the solid components in the diluted emulsion-type binder is 5-20% by weight, optionally 8-16% by weight, based on a total weight of the diluted slurry. By dilution with deionized water, the metastable equilibrium between an emulsifier in surface layer of the emulsion-type binder and a solvent is destroyed, allowing the settling, ultrasonication, and kneading to more easily damage the outer shells of the colloidal particles of the emulsion-type binder.

In some embodiments, a rotational speed in the centrifugation operation is 2000-4000 rpm, optionally 2500-3500 rpm, and a time duration is 5-20 min, optionally 7-15 min. With proper rotational speed and centrifugal time, the outer shells of the colloidal particles of the emulsion-type binder can be sufficiently damaged, and energy can be saved.

In some embodiments, the additive may contain another binder, which is different from the emulsion-type binder. Thus, in the context of the present invention, the emulsion-type binder is also referred to as a first binder, and the other binder is referred to as a second binder.

Optionally, a mass ratio of the solid components of the emulsion-type binder (first binder) to the other binder (second binder) is 1:4-4: 1, optionally 1:2-2: 1. Optionally, the other binder (second binder) is a non-emulsion-type binder, such as a modified or non-modified polyamide, polyacrylic acid, sodium carboxymethyl cellulose (CMC), hydroxypropyl methyl cellulose, methyl cellulose, ethyl cellulose, or chitosan. Addition of the additive facilitates the improvement of the stability of the slurry.

In addition, the following describes a secondary battery, a battery module, a battery pack, and an electric apparatus in this application with appropriate reference to the accompanying drawings.

An embodiment of this application provides a secondary battery.

Normally, the secondary battery includes a positive electrode plate, a negative electrode plate, an electrolyte, and a separator. In a charge and discharge process of the battery, active ions are intercalated and deintercalated between the positive electrode plate and the negative electrode plate. The electrolyte conducts ions between the positive electrode plate and the negative electrode plate. The separator is disposed between the positive electrode plate and the negative electrode plate to mainly prevent a short circuit between positive and negative electrodes and to allow the ions to pass through.

### [Positive electrode plate]

The positive electrode plate includes a positive electrode current collector and a positive electrode film layer disposed on at least one surface of the positive electrode current collector, where the positive electrode film layer includes the positive electrode active material according to the first aspect of this application

For example, the positive electrode current collector includes two opposite surfaces in its thickness direction, and the positive electrode film layer is disposed on either or both of the two opposite surfaces of the positive electrode current collector.

In some embodiments, the positive electrode current collector may be a metal foil current collector or a composite current collector. For example, an aluminum foil may be used as the metal foil. The composite current collector may include a polymer material matrix and a metal layer formed on at least one surface of the polymer material matrix. The composite current collector may be formed by forming a metal material (aluminum, aluminum alloy, nickel, nickel alloy, titanium, titanium alloy, silver, silver alloy, or the like) on a polymer material matrix (for example, matrices of polypropylene (PP), polyethylene terephthalate (PET), polybutylene terephthalate (PBT), polystyrene (PS), and polyethylene (PE)).

In some embodiments, the positive electrode active material may be a positive electrode active material for batteries well-known in the art. For example, the positive electrode active material may include at least one of the following materials: olivine-structured lithium-containing phosphate, lithium transition metal oxide, and respective modified compounds thereof. However, this application is not limited to such materials, and may alternatively use other conventional well-known materials that can be used as positive electrode active materials for batteries. One type of these positive electrode active materials may be used alone, or two or more of them may be used in combination. Examples of the lithium transition metal oxide may include but are not limited to at least one of lithium cobalt oxide (for example, LiCoO₂), lithium nickel oxide (for example, LiNiO₂), lithium manganese oxide (for example, LiMnO₂ and LiMn₂O₄), lithium nickel cobalt oxide, lithium manganese cobalt oxide, lithium nickel manganese oxide, lithium nickel cobalt manganese oxide (for example, LiNi_{1/3}Co_{1/3}Mn_{1/3}O₂ (NCM333 for short), LiNi_{0.5}Co_{0.2}Mn_{0.3}O₂ (NCM523 for short), LiNi_{0.5}Co_{0.25}Mn_{0.25}O₂ (NCM211 for short), LiNi_{0.6}Co_{0.2}Mn_{0.2}O₂ (NCM622 for short), and LiNi_{0.8}Co_{0.1}Mn_{0.1}O₂ (NCM811 for short)), lithium nickel cobalt aluminum oxide (for example, LiNi_{0.85}Co_{0.15}Al_{0.05}O₂), and modified compounds thereof. Examples of the olivine-structured lithium-containing phosphate may include but are not limited to at least one of lithium iron phosphate (for example, LiFePO₄ (LFP for short)), a composite material of lithium iron phosphate and carbon, lithium manganese phosphate (for example, LiMnPO₄), composite materials of lithium manganese phosphate and carbon, lithium manganese iron phosphate, and composite materials of lithium manganese iron phosphate and carbon.

In some embodiments, the positive electrode film layer further optionally includes a binder. For example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin.

In some embodiments, the positive electrode film layer further optionally includes a conductive agent. For example, the conductive agent may include at least one of superconducting carbon, acetylene black, carbon black, Ketjen black, carbon dots, carbon nanotubes, graphene, and carbon nanofiber.

In some embodiments, the positive electrode plate may be prepared in the following manner: the foregoing constituents used for preparing the positive electrode plate, for example, the positive electrode active material, the conductive agent, the binder, and any other constituent, are dispersed in a solvent (for example, N-methylpyrrolidone) to form a positive electrode slurry; and the positive electrode slurry is applied onto the positive electrode current collector, followed by processes such as drying and cold pressing to obtain the positive electrode plate.

### [Electrolyte]

The electrolyte conducts ions between the positive electrode plate and the negative electrode plate. The electrolyte is not specifically limited to any particular type in this application, and may be selected based on needs. For example, the electrolyte may be in a liquid state, a gel state, or an all-solid state.

In some embodiments, the electrolyte is a liquid electrolyte. The liquid electrolyte includes an electrolytic salt and a solvent.

In some embodiments, the electrolytic salt may be selected from at least one of lithium hexafluorophosphate, lithium tetrafluoroborate, lithium perchlorate, lithium hexafluoroborate, lithium bis(fluorosulfonyl)imide, lithium bis-trifluoromethanesulfon imide, lithium trifluoromethanesulfonate, lithium difluorophosphate, lithium difluorooxalatoborate, lithium bisoxalatoborate, lithium difluorobisoxalate phosphate, and lithium tetrafluoro oxalate phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methanesulfonate, and diethyl sulfone.

In some embodiments, the liquid electrolyte further optionally includes an additive. For example, the additive may include a negative electrode film-forming additive, a positive electrode film-forming additive, or may include an additive that can improve some performance of a battery, for example, an additive for improving overcharge performance of the battery and an additive for improving high-temperature performance or low-temperature performance of the battery.

### [Separator]

In some embodiments, the secondary battery further includes a separator. The separator is not limited to any particular type in this application, and may be any well-known porous separator with good chemical stability and mechanical stability.

In some embodiments, a material of the separator may be selected from at least one of glass fiber, non-woven fabric, polyethylene, polypropylene, and polyvinylidene fluoride. The separator may be a single-layer film or a multi-layer composite film, and is not particularly limited. When the separator is a multi-layer composite film, all layers may be made of same or different materials, which is not particularly limited.

In some embodiments, the positive electrode plate, the negative electrode plate, and the separator may be made into an electrode assembly through winding or lamination.

In some embodiments, the secondary battery may include an outer package. The outer package may be used for packaging the foregoing electrode assembly and electrolyte.

In some embodiments, the outer package of the secondary battery may be a hard shell, for example, a hard plastic shell, an aluminum shell, or a steel shell. The outer package of the secondary battery may alternatively be a soft pack, for example, a soft pouch. Material of the soft pack may be plastic, which, for example, may be polypropylene, polybutylene terephthalate, and polybutylene succinate.

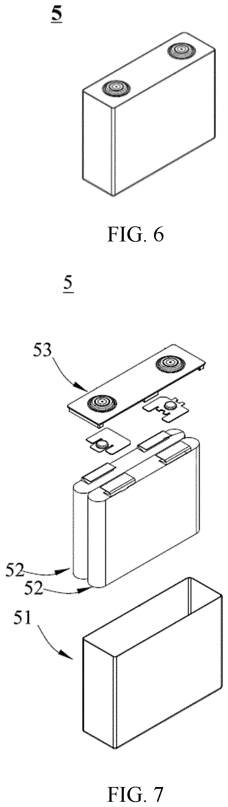

This application does not impose any special limitations on a shape of the secondary battery, and the secondary battery may be cylindrical, rectangular, or of any other shapes. For example, FIG. 6 shows a secondary battery 5 of a rectangular structure as an example.

In some embodiments, referring to FIG. 7, the outer package may include a housing 51 and a cover plate 53. The housing 51 may include a base plate and a side plate connected onto the base plate, and the base plate and the side plate enclose an accommodating cavity. The housing 51 has an opening communicating with the accommodating cavity, and the cover plate 53 can cover the opening to close the accommodating cavity. The positive electrode plate, the negative electrode plate, and the separator may be made into an electrode assembly 52 through winding or lamination. The electrode assembly 52 is packaged in the accommodating cavity. The liquid electrolyte infiltrates the electrode assembly 52. There may be one or more electrode assemblies 52 in the secondary battery 5, and persons skilled in the art may make choices according to specific actual requirements.

In some embodiments, the secondary battery may be assembled into a battery module, and the battery module may include one or more secondary batteries. The specific quantity may be chosen by persons skilled in the art according to use and capacity of the battery module.

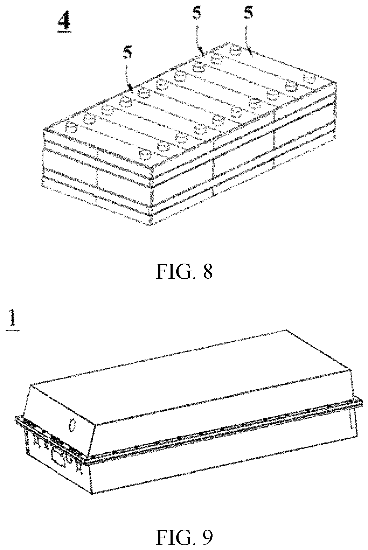

FIG. 8 shows a battery module 4 as an example. Refer to FIG. 8. In the battery module 4, a plurality of secondary batteries 5 may be sequentially arranged in a length direction of the battery module 4. Certainly, the batteries may alternatively be arranged in any other manners. Further, the plurality of secondary batteries 5 may be fastened by using fasteners.

Optionally, the battery module 4 may further include a housing with an accommodating space, and the plurality of secondary batteries 5 are accommodated in the accommodating space.

In some embodiments, the battery module may be further assembled into a battery pack, and the battery pack may include one or more battery modules. The specific quantity may be chosen by persons skilled in the art according to use and capacity of the battery pack.

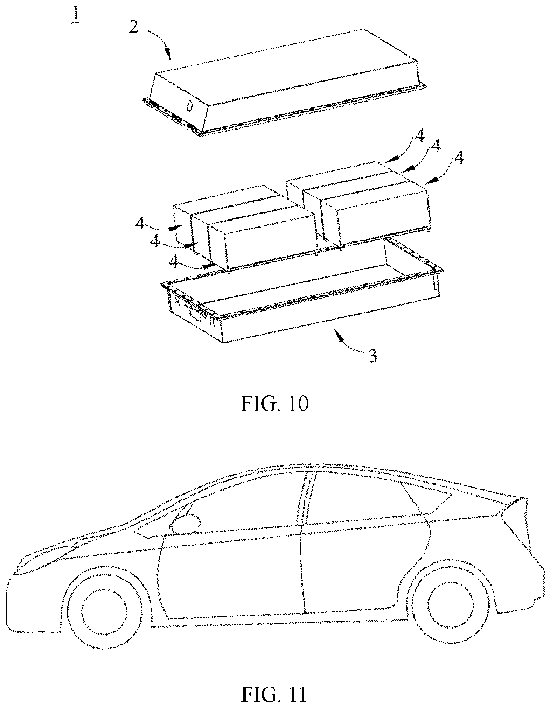

FIG. 9 and FIG. 10 show a battery pack 1 as an example. Referring to FIG. 9 and FIG. 10, the battery pack 1 may include a battery box and a plurality of battery modules 4 disposed in the battery box. The battery box includes an upper box body 2 and a lower box body 3. The upper box body 2 can cover the lower box body 3 to form an enclosed space for accommodating the battery modules 4. The plurality of battery modules 4 may be arranged in the battery box in any manner.

In addition, this application further provides an electric apparatus. The electric apparatus includes at least one of the secondary battery, the battery module, or the battery pack provided in this application. The secondary battery, the battery module, or the battery pack may be used as a power source for the electric apparatus or an energy storage unit of the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, or the like, but is not limited thereto.

The secondary battery, the battery module, or the battery pack may be selected for the electric apparatus based on requirements for using the electric apparatus.

FIG. 11 shows an electric apparatus as an example. This electric apparatus is a battery electric vehicle, a hybrid electric vehicle, a plug-in hybrid electric vehicle, or the like. To satisfy a requirement of the electric apparatus for high power and high energy density of the secondary battery, a battery pack or a battery module may be used.

In another example, the apparatus may be a mobile phone, a tablet computer, a notebook computer, or the like. The apparatus usually is required to be light and thin, and a secondary battery may be used as a power source.

### Examples

The following describes examples of this application. The examples described below are illustrative and only used for explaining this application, and cannot be construed as limitations on this application. Examples whose technical solutions or conditions are not specified are made in accordance with technical solutions or conditions described in literature in the field or made in accordance with product instructions. The reagents or instruments used are all conventional products that are commercially available if no manufacturer is indicated.

### I. Preparation method

### Example 1

### [Negative electrode plate]

Step 1: Graphite, superconducting carbon, and carboxymethyl cellulose (CMC) were added at a mass ratio of 96:1:1.5 to a dual planetary mixer with kneading paddles, stirred for 15 min at a revolution speed of 20 rpm without starting rotation, and mixed well to obtain a first mixture;
Step 2: Styrene-butadiene rubber emulsion (SBR emulsion with a percentage of solid components of 50 by weight) was added to the first mixture obtained in step 1 according to a mass ratio 1:1 of the solid components of the SBR to CMC;
Step 3: Deionized water was added to the mixture that includes the SBR and is obtained in step 2 for adjusting a mass fraction of the solid components of the slurry to 65% by weight (based on a total weight of the slurry) to obtain an initial slurry;
Step 4: The initial slurry obtained in step 3 was kneaded and stirred for 2 min at a revolution speed of 100 rpm without starting rotation;
Step 5: Deionized water was added to the slurry obtained in step 4 for adjusting the mass fraction of the solid components of the slurry to 55% by weight (based on the total weight of the slurry), and then stirring was performed for 90 min at a revolution speed of 20 rpm and a rotation speed of 1000 rpm to obtain the negative electrode slurry; and
Step 6: The prepared negative electrode slurry was applied with a coating weight of 0.2 g/1540.25 mm², followed by processes such as drying, cold pressing, and slitting to obtain negative electrode plates.

### [Positive electrode plate]

A positive electrode ternary material (NCM₈₁₁), superconducting carbon, and the binder polyvinylidene fluoride (PVDF) were mixed at a mass ratio of 96:2.5:1.5, added with the solvent N-methylpyrrolidone (NMP) to adjust a mass fraction of solid components to 75% by weight, and stirred well to obtain the positive electrode slurry. Positive electrode plates were prepared after processes such as coating, drying, cold pressing, and slitting.

### [Liquid Electrolyte]

In an argon atmosphere, EC (ethylene carbonate) and EMC (ethyl methyl carbonate) were mixed at a mass ratio of 3:7, added with LiPF₆ to form a liquid electrolyte. In the liquid electrolyte, a mass percentage of LiPF₆ was 12.5%.

### [Separator]

Polypropylene separator.

### [Secondary battery]

The positive electrode plate, the separator, and the negative electrode plate were stacked in order, so that the separator was placed between the positive and negative electrode plates for separation. The stack was wound to form a prismatic bare cell, the bare cell was placed into a housing, a corresponding liquid electrolyte was injected, and sealing was performed. After processes such as standing, hot/cold pressing, formation, clamping, and grading, a secondary battery was obtained.

### Examples 2-8

The preparation method of the negative electrode plate involved in examples 2-8 is the same as the preparation method of the negative electrode plate of example 1, except that the time for kneading and stirring in step 4 was adjusted, with specific values of 5, 10, 20, 50, 60, 70, 80 min, respectively.

### Example 9

### [Negative electrode plate]

Step 1: Graphite, superconducting carbon, and carboxymethyl cellulose (CMC) were added at a mass ratio of 96:1:1.5 to a dual planetary mixer with kneading paddles, stirred for 15 min at a revolution speed of 20 rpm without starting rotation, and mixed well to obtain a first mixture;
Step 2: Deionized water was added to the first mixture obtained in step 1 for adjusting a mass fraction of the solid components of the slurry to 65% by weight to obtain an initial slurry;
Step 3: The initial slurry obtained in step 2 was stirred for 30 min at a revolution speed of 20 rpm and a rotation speed of 200 rpm to obtain a mixture;
Step 4: Pretreatment process of SBR emulsion (dilution + settling): Absolute ethanol was added to the SBR emulsion in advance, so that a ratio of a mass of the absolute ethanol added to a mass of solid components of the SBR was 5:95, and then deionized water was added for dilution until a percentage of the solid components of the SBR was 15% by weight. At that point, the pretreatment process was over. Subsequently, the SBR emulsion after the above pretreatment was added to the mixture of step 3, and the SBR emulsion was added in such an amount that a mass ratio of the solid components of the SBR to the CMC in the mixed system was 1:1;
Step 5: Deionized water was added to the mixed system obtained in step 4 for adjusting the mass fraction of the solid components of the slurry to 55% by weight, and then stirring was performed for 60 min at a revolution speed of 20 rpm and a rotation speed of 1000 rpm to obtain the negative electrode slurry; and
Step 6: The prepared negative electrode slurry was applied with a coating weight of 0.2 g/1540.25 mm², followed by processes such as drying, cold pressing, and slitting to obtain negative electrode plates.

The preparation processes of other [Positive electrode plate], [Liquid electrolyte], [Separator], and [Secondary battery] were the same as those in example 1.

### Example 10

A preparation process of this example was similar to that of negative electrode plate in example 9, except that the pretreatment process of the SBR emulsion in step 4 was replaced with dilution + ultrasonication: The SBR emulsion was diluted with deionized water to a percentage of the solid components of 10% by weight, and then was ultrasonicated at a frequency of 40 kHz, at 50°C for 30 min.

The preparation processes of other [Positive electrode plate], [Liquid electrolyte], [Separator], and [Secondary battery] were the same as those in example 1.

### Example 11

A preparation process of this example was similar to that of negative electrode slurry in example 9, except that the pretreatment process of the SBR emulsion in step 4 was replaced with centrifugation: The SBR emulsion was centrifuged at 3000 rpm for 10 min.

The preparation processes of other [Positive electrode plate], [Liquid electrolyte], [Separator], and [Secondary battery] were the same as those in example 1.

### Example 12

A preparation process of this example was similar to that of negative electrode slurry in example 9, except that the pretreatment process of the SBR emulsion in step 4 was replaced with settling: Ethyl methyl carbonate (EMC) was added to the SBR emulsion, where a ratio of a mass of the EMC added to a mass of the solid components of the SBR was 5:95.

The preparation processes of other [Positive electrode plate], [Liquid electrolyte], [Separator], and [Secondary battery] were the same as those in example 1.

### Example 13

A preparation process of this example was similar to that of negative electrode slurry in example 1, except that the SBR emulsion in step 2 was replaced with an ethylene propylene rubber emulsion, and the kneading and stirring time in step 4 was changed to 50 min.

The preparation processes of other [Positive electrode plate], [Liquid electrolyte], [Separator], and [Secondary battery] were the same as those in example 1.

### Example 14

A preparation process of this example was similar to that of negative electrode slurry in example 1, except that in step 2, the SBR emulsion was replaced with an acrylate emulsion, and the kneading and stirring time in step 4 was changed to 50 min.

The preparation processes of other [Positive electrode plate], [Liquid electrolyte], [Separator], and [Secondary battery] were the same as those in example 1.

### Comparative Example 1

A preparation process of this example was similar to that of negative electrode slurry in example 9, except that the pretreatment process of the emulsion in step 4 was omitted, and the SBR emulsion was added directly to the mixture in step 3, so that the mass ratio of solid components of the SBR to the CMC was 1:1.

The preparation processes of other [Positive electrode plate], [Liquid electrolyte], [Separator], and [Secondary battery] were the same as those in example 1.

### Comparative Example 2

A preparation process of this example was similar to that of negative electrode slurry in example 9, except that the pretreatment process of the emulsion in step 4 was omitted, and the SBR emulsion was added directly to the mixture in step 3, so that the mass ratio of solid components of the ethylene propylene rubber to the CMC was 1:1.

The preparation processes of other [Positive electrode plate], [Liquid electrolyte], [Separator], and [Secondary battery] were the same as those in example 1.

### Comparative Example 3

A preparation process of this example was similar to that of negative electrode slurry in example 9, except that the pretreatment process of the emulsion in step 4 was omitted, and the SBR emulsion was added directly to the mixture in step 3, so that the mass ratio of solid components of an acrylate to the CMC was 1:1.

The preparation processes of other [Positive electrode plate], [Liquid electrolyte], [Separator], and [Secondary battery] were the same as those in example 1.

### II. Test methods for each parameter

### [negative electrode plate parameter test]

### 1. Area A of regions in which an emulsion-type binder is in irregular film-like distribution and area B of regions in which the emulsion-type binder is in single particle distribution or in distribution of clusters composed of single particles

From the negative electrode plate of the present invention, 20 negative electrode film layers at different positions were randomly selected and SEM imaged (by a scanning electron microscope, SEM, Sigma-02-33 of ZEISS, Germany) at a same magnification (10K or 20K) to obtain 20 SEM images. An area measuring tool included in the SEM device was used to first calculate an area sum of regions in which the emulsion-type binder is in irregular film-like distribution in each image, and then an additive value obtained by adding the area sums of the 20 images was divided by 20 to obtain an average value of an area sum of regions in the irregular film-like distribution. This average value was the area sum A described in this application. In the same way, the area sum B of the regions in single particle distribution or in distribution of clusters composed of single particles was also obtained.

### 2. Adhesion test

Negative electrode plates taken from the examples and comparative examples were cut into test samples with a length of 100 mm and a width of 10 mm. A stainless steel plate with a width of 25 mm was taken and applied with a double-sided adhesive tape (with a width of 11 mm), the test sample was attached to the double-sided adhesive tape on the stainless steel plate, and a 2000 g roller was rolled on a surface of the test sample back and forth three times at a speed of 300 mm/min. Then, one end of the test sample was bent 180 degrees, a negative electrode film layer of the test sample was manually peeled from the current collector by 25 mm in a length direction, and the test sample was fixed on a testing machine (for example, INSTRON 336) so that a peeling surface was aligned with a force line of the testing machine (keeping a pulling direction of the testing machine parallel to the length direction of the electrode plate). The testing machine continuously performed peeling at 30 mm/min, and a peeling force curve was obtained. A peeling force F0 corresponding to a plateau on the peeling force curve was taken and an adhesion F between the negative electrode film and the current collector in the test sample is equal to F0/the width of the test sample (a measurement unit of F: N/m).

### 3. Cohesion test

Negative electrode plates taken from the examples and comparative examples were cut into test samples with a length of 100 mm and a width of 10 mm. A stainless steel plate with a width of 25 mm was taken and applied with a double-sided adhesive tape (with a width of 11 mm), the test sample was attached to the double-sided adhesive tape on the stainless steel plate, and a 2000 g roller was rolled on a surface of the test sample back and forth three times at a speed of 300 mm/min. Additionally, a green glue with low viscosity was pasted on a surface of the negative electrode film layer of the test sample (strength of binding of the green glue with low viscosity is 350±20 g / 25 mm). Then, one end of the test sample was bent 180 degrees, a negative electrode film layer and the green glue were manually peeled away by 25 mm in a length direction, and the test sample was fixed on a testing machine (for example, INSTRON 336) so that a peeling surface was aligned with a force line of the testing machine (keeping a pulling direction of the testing machine parallel to the length direction of the electrode plate). The testing machine continuously performed peeling at 30 mm/min, and a peeling force curve was obtained. A peeling force N0 corresponding to a plateau on the peeling force curve was taken and an adhesion N between the negative electrode film and the current collector in the test sample is equal to N0/the width of the test sample (a measurement unit of N: N/m).

### 4. x and d tests

A test process for any d of this application was as follows: A negative electrode film layer on the current collector side was selected, thickness of the negative electrode film layer was measured as D, and a negative electrode film layer corresponding to a predetermined depth D1 was peeled off from the surface of the negative electrode film layer to the predetermined depth D1 along the direction of thickness of the negative electrode film layer using SAICAS (surface and interface cutting analysis system, Daipla Wintes Japan) (that is, thickness of the peeled negative electrode film layer is D1), then d = D1/D.

A test process for any x of this application was as follows: Pyrolysis-mass spectrometry (Shimadzu Py-GCMS QP-2020) was used to measure a percentage X of a binder in the entire negative electrode film layer, and a percentage of the binder in remaining negative electrode film layer after the negative electrode film layer of thickness D1 is peeled off is Y1, then x = (X - Y1)/X. For SBR, characteristic ion fragment of styrene was used, with a retention time of 4.075 min and a molecular weight of 104.

### [Performance test of secondary battery]

### 1. Battery cycling performance test

At 45°C, the secondary batteries prepared in the examples and comparative examples were charged at a constant current of 0.5C rate to the charge cut-off voltage of 4.25 V, then charged at a constant voltage to a current ≤ 0.05C, with the capacity of the batteries at this moment recorded as C0, left standing for 10 min, then discharged at a constant current of 0.5C rate to the discharge cut-off voltage of 2.8 V, and left standing for 10 min. This was one charge and discharge cycle. The batteries were charged and discharged for 50 cycles by using this method, and the corresponding battery discharge capacity at the end of the last cycle was recorded as C, then a cycling capacity retention rate = C/C0* 100%.

### 2. Measurement method of state of charge (SOC) and direct current resistance (DCR)

SOC: At 25°C, the secondary batteries prepared in the examples and comparative examples were charged at a constant current of 0.5C rate to the charge cut-off voltage of 4.25 V, then charged at a constant voltage to a current ≤ 0.05C and left standing for 10 min, then discharged at a constant current of 0.5C rate to the discharge cut-off voltage of 2.8 V, and left standing for 10 min. This was one charge and discharge cycle.

Then, at 25°C, the secondary batteries prepared in the examples and comparative examples were charged at a constant current of 0.5C rate to the charging cut-off voltage of 4.25 V, then charged at a constant voltage to a current ≤ 0.05C. Battery capacity at this moment was recorded as 100% SOC;

Then, at 25°C, the batteries were discharged at a constant current of 1C rate for 6 min and left standing for 1h. The capacity at this moment was 90% SOC and the voltage was recorded as U0. Then the batteries were discharged at 5C rate and a current I for 10s and the voltage was recorded as U1, 90% SOC DCR = (U0-U1)/I.

In the same way, DCR was tested at 1C with a depth of discharge of 50% and 20% SOC.

### III. Performance evaluation

### Distribution morphology of the binder on surface of negative electrode active material

It can be learned from FIG. 1 and FIG. 2 that part of the binder of example 1 in the negative electrode active material is in irregular film-like distribution, which significantly increases the cohesion between particles of the negative electrode active material and the adhesion between the negative electrode film layer and the current collector, while the binder on surface of the negative electrode active material of comparative example 1 is only in single particle distribution and therefore has poor adhesion and cohesion.

### Performance tests of negative electrode plate and secondary battery

The negative electrode plates and secondary batteries prepared in examples 1 to 14 and comparative examples 1 to 3 were subjected to performance tests, and the results are shown in Tables 1 and 2.

**Table 1**

| No. | Type of emulsion-type binder | Pretreatment method of emulsion-type binder | A/(A + B) | Adhesion (N/m) | Cohesion (N/m) | Cycling capacity retention rate |
|---|---|---|---|---|---|---|
| Example 1 | SBR | Kneading for 2 min at a revolution speed of 100 rpm | 12:100 | 8.6 | 142 | 98.3% |
| Example 2 | SBR | Kneading for 5 min at a revolution speed of 100 rpm | 30:100 | 9.0 | 160 | 98.6% |
| Example 3 | SBR | Kneading for 10 min at a revolution speed of 100 rpm | 47:100 | 9.5 | 177 | 98.9% |
| Example 4 | SBR | Kneading for 20 min at a revolution speed of 100 rpm | 60:100 | 10.8 | 196 | 99.3% |
| Example 5 | SBR | Kneading for 50 min at a revolution speed of 100 rpm | 80:100 | 13.6 | 210 | 99.5% |
| Example 6 | SBR | Kneading for 60 min at a revolution speed of 100 rpm | 93:100 | 14.0 | 214 | 99.5% |
| Example 7 | SBR | Kneading for 70 min at a revolution speed of 100 rpm | 95:100 | 14.1 | 217 | 99.4% |
| Example 8 | SBR | Kneading for 80 min at a revolution speed of 100 rpm | 98:100 | 14.3 | 228 | 99.5% |
| Example 9 | SBR | Dilution + settling | 60:100 | 11.2 | 182 | 99.3% |
| Example 10 | SBR | Dilution + ultrasonication | 70:100 | 11.4 | 174 | 99.2% |
| Example 11 | SBR | Centrifugation | 80:100 | 13.1 | 161 | 98.9% |
| Example 12 | SBR | Settling | 60:100 | 12.5 | 180 | 99.0% |
| Example 13 | Ethylene propylene rubber | Kneading for 50 min | 85:100 | 13.3 | 177 | 98.7% |
| Example 14 | Polyacrylate emulsion | Kneading for 50 min | 80:100 | 18.2 | 185 | 98.8% |
| Comparative example 1 | SBR | / | / | 8.0 | 130 | 98.1% |
| Comparative example 2 | Ethylene propylene rubber | / | / | 7.8 | 100 | 97.5% |
| Comparative example 3 | Polyacrylate emulsion | / | / | 11 | 110 | 97.4% |

| | | | | | | |
|---|---|---|---|---|---|---|
| Note: "/" in column "Pretreatment method of emulsion-type binder" means no pretreatment and no kneading, and "/" in column "A/(A + B)" indicates that no irregular film-like distribution was observed. | | | | | | |

It can be learned from the results of comparisons between examples 1 to 5 and comparative example 1 in Table 1 that kneading of the emulsion-type binder SBR with superconducting carbon, graphite active material, and sodium carboxymethyl cellulose at a revolution speed of 100 rpm has changed the distribution morphology of the SBR on surface of graphite active material, and a ratio of the area sum A of regions in which the SBR was in irregular film-like distribution to the area sum B of the regions in single particle distribution or in distribution of clusters composed of single particles has changed in the electrode plate prepared. As the kneading time increases, A/(A + B) gradually increases, the adhesion and cohesion of the electrode plate increase, and correspondingly, the cycling retention rate of the batteries after 50 cycles increases.

It can be learned from the results of examples 6 to 8 that with other conditions unchanged, further increasing the kneading time in the presence of SBR can allow the A/(A + B) in the electrode plate to be greater than 80:100 and the adhesion and cohesion as well as the cycling capacity retention rate after 50 cycles of the prepared batteries to be maintained at a high level.

It can be learned from examples 9 to 12 that use of other pretreatment methods of the emulsion-type binder, such as settling, ultrasonication, centrifugation of SBR emulsions, or supplemented with dilution, can also reduce the stability of emulsion particles of the emulsion-type SBR and obtain a larger ratio of A/(A + B), increasing the adhesion and cohesion of the electrode plate prepared and improving the cycling capacity retention rate after 50 cycles of batteries prepared using the electrode plate.

It can be learned from the results of comparison between examples 13 and 14 and comparative examples 2 and 3 that according to the preparation method of the present invention, use of other emulsion-type binders (for example, ethylene propylene rubber and polyacrylate emulsion) as the binder can also achieve the effects of increasing the adhesion and cohesion of the electrode plate and increasing the cycling capacity retention rate after 50 cycles of batteries prepared.

### Measurement of mass percentage of emulsion-type binder

**Table 2**

| No. | Emulsion-type binder | Treatment method of emulsion-type binder | x/d maximum | Difference in mass percentage of emulsion-type binder between upper half layer and lower half layer | Adhesion (N/m) | Cohesion (N/m) | Cycling capacity retention rate |
|---|---|---|---|---|---|---|---|
| Example 1 | SBR | Kneading for 2 min at a revolution speed of 100 rpm | 1.8 | 12% | 8.6 | 142 | 98.3% |
| Example 3 | SBR | Kneading for 10 min at a revolution speed of 100 rpm | 1.5 | 10% | 9.5 | 177 | 98.9% |
| Example 5 | SBR | Kneading for 50 min at a revolution speed of 100 rpm | 1.2 | 6% | 13.6 | 210 | 99.5% |
| Comparative example 1 | SBR | Untreated | 1.9 | 16% | 8.0 | 130 | 98.1% |

It can be learned from the results in Table 2 that the maximum value of x/d decreased gradually with the increase in kneading time, and the difference in the mass percentage of SBR between the upper half layer and the lower half layer of the negative electrode film layer decreased gradually, which indicates that the distribution of SBR in the negative electrode film layer tends to be more homogeneous, suppressing the floating of the binder. In addition, the adhesion and cohesion of the electrode plate prepared were increased, and the cycling capacity retention rate after 50 cycles of the batteries prepared using the modified electrode plate was improved.

### Test results of direct current resistance (DCR) of secondary batteries

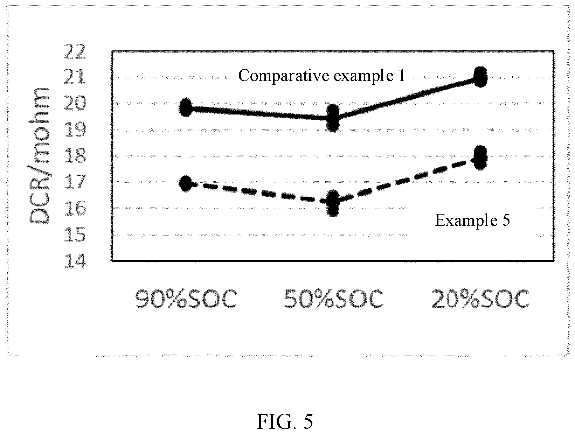

The secondary batteries manufactured in comparative example 1 and example 5 were measured by the foregoing method for measuring the state of charge (SOC) and DC resistance (DCR), and the results are shown in FIG. 5. In the figure, at a same SOC, the secondary battery of example 5 of the present invention has a lower direct current resistance compared to that of comparison example 1. This is due to the fact that in the present invention, the emulsion-type binder is more uniformly distributed in the electrode plate film layer, which reduces the degree of aggregation of the emulsion-type binder at the upper layer, thereby reducing lithium ion migration potential resistance caused by the aggregation of the SBR at the upper layer, and therefore, the direct current resistance DCR of the electrochemical apparatus prepared was improved (example 5 and comparative example 1).

It should be noted that this application is not limited to the foregoing embodiments. The foregoing embodiments are merely examples, and embodiments having substantially the same constructions and the same effects as the technical idea within the scope of the technical solutions of this application are all included in the technical scope of this application. In addition, without departing from the essence of this application, various modifications made to the embodiments that can be conceived by persons skilled in the art, and other manners constructed by combining some of the constituent elements in the embodiments are also included in the scope of this application.

## Claims

1. A negative electrode plate, **characterized by**
comprising a current collector and a negative electrode film layer disposed on at least one surface of the current collector, the negative electrode film layer comprising a negative electrode active material and an emulsion-type binder; wherein
at least a portion of the emulsion-type binder is in irregular film-like distribution on surface of the negative electrode active material; and
the irregular film-like distribution refers to a state in which, in an SEM image of the negative electrode film layer taken by a scanning electron microscope at a magnification of 10K, the emulsion-type binder is in irregularly shaped thin film-like distribution on the surface of the negative electrode active material, neither in single particle distribution nor in distribution of clusters composed of single particles.

2. The negative electrode plate according to claim 1, **characterized in that**
on the surface of the negative electrode active material, in the SEM image of the negative electrode film layer taken by the scanning electron microscope at a magnification of 10K, a piece of the emulsion-type binder in irregular film-like distribution is arbitrarily selected, a closed region is constructed along edge of a film-like structure of the piece of the emulsion-type binder, and a radius of a standard circle normalized from the closed region is not less than 500 nm.

3. The negative electrode plate according to claim 1 or 2, **characterized in that** in the SEM image, given that an area sum of regions in which the emulsion-type binder is in irregular film-like distribution is A and that an area sum of regions in which the emulsion-type binder is in single particle distribution or in distribution of clusters composed of single particles is B, then a ratio of A to (A + B) is at least 10:100, optionally 60:100-100:100, and further optionally 80:100-98:100.

4. The negative electrode plate according to any one of claims 1 to 3, **characterized in that**
in a direction of the outer surface of the negative electrode film layer toward the current collector, given that a ratio of a longitudinal depth of the negative electrode film layer to a total thickness of entire negative electrode film layer is d, that a ratio of a mass percentage of the emulsion-type binder in the negative electrode film layer of the longitudinal depth to a mass percentage of the emulsion-type binder in the entire negative electrode film layer is x, that the total thickness of the entire negative electrode film layer is 1, and that the mass percentage of the emulsion-type binder in the entire negative electrode film layer is 1, then 0 < d < 1 and 0 < x < 1; and x and d satisfy: 1 < x/d ≤ 1.8, optionally 1 < x/d ≤ 1.5.

5. The negative electrode plate according to any one of claims 1 to 4, **characterized in that**
mass percentage of the emulsion-type binder in a lower half layer of the negative electrode film layer is less than mass percentage of the emulsion-type binder in an upper half layer of the negative electrode film layer by a difference of not more than 12%, the lower half layer and the upper half layer being bounded by 1/2 of thickness of the negative electrode film layer located on a same side of the current collector.

6. The negative electrode plate according to any one of claims 1 to 5, **characterized in that**
the emulsion-type binder is selected from at least one of styrene-butadiene rubber, polyacrylate, ethylene propylene rubber, nitrile rubber, and polyvinylidene fluoride.

7. A preparation method of negative electrode plate, comprising the following steps:
pretreating an emulsion-type binder, wherein the pretreatment method comprises at least one of the following operations: ultrasonication, settling, centrifugation, and kneading;
mixing a negative electrode active substance, a conductive agent, and an additive in a predetermined ratio to obtain a first mixture;
mixing the pretreated emulsion-type binder, the first mixture, and deionized water to obtain a negative electrode slurry; and
applying the negative electrode slurry to at least one surface of a current collector, followed by drying to obtain the negative electrode plate; and alternatively
the method comprises the following steps:
mixing a negative electrode active substance, a conductive agent, and an additive in a predetermined ratio to obtain a first mixture;
mixing the emulsion-type binder, the first mixture, and deionized water uniformly by kneading and stirring to obtain a negative electrode slurry; and
applying the negative electrode slurry to at least one surface of a current collector, followed by drying to obtain the negative electrode plate;
wherein
the negative electrode plate comprises a current collector and a negative electrode film layer disposed on at least one surface of the current collector, wherein the negative electrode film layer comprises a negative electrode active material and an emulsion-type binder, and most or all of the emulsion-type binder is in irregular film-like distribution on the surface of the negative electrode active material; and
the irregular film-like distribution refers to a state in which, in an SEM image of the negative electrode film layer taken by a scanning electron microscope at a magnification of 10K, the emulsion-type binder is in irregularly shaped thin film-like distribution on the surface of the negative electrode active material, neither in single particle distribution nor in distribution of clusters composed of single particles.

8. A secondary battery, the secondary battery comprising a positive electrode plate, a negative electrode plate, a separator, and a liquid electrolyte, wherein the negative electrode plate is the negative electrode plate according to any one of claims 1 to 6, or a negative electrode plate prepared using the method according to claim 7.

9. A battery module, comprising the secondary battery according to claim 8.

10. A battery pack, comprising the battery module according to claim 9.

11. An electric apparatus, comprising at least one of the secondary battery according to claim 8, the battery module according to claim 9, or the battery pack according to claim 10.
